# EUROPEAN PATENT APPLICATION

(11) **EP 4 810 230 A1**
(43) Date of publication of application: **23.09.2026**
(21) Application number: 26163195.6
(22) Date of filing: 09.03.2026
(51) Int. Cl.: B29C 64/106, B29C 64/112, B29C 64/236, B29C 64/264, B29C 64/393, B33Y 10/00, B33Y 30/00, B33Y 40/20, B33Y 50/02

(54) **METHOD OF MANUFACTURING THREE-DIMENSIONAL FORMED OBJECT AND SYSTEM FOR MANUFACTURING THREE-DIMENSIONAL FORMED OBJECT**

(30) Priority: 19.03.2025 JP 2025044216
(71) Applicant: Ricoh Company, Ltd., Tokyo 143-8555 (JP)
(72) Inventor: SHINGAI, Yuki, Tokyo, 143-8555 (JP); NAITO, Hiroyuki, Tokyo, 143-8555 (JP); SUGIURA, Kenji, Tokyo, 143-8555 (JP)
(74) Representative: SSM Sandmair

(57) **Abstract**

A method of manufacturing a three-dimensional formed object (M) in which a formed object (M) is three-dimensionally formed using a curable ink composition (21) that is cured by active energy rays (31), the method including: discharging the curable ink composition (21) onto a build surface (11) of a movable build stage (10) from a discharge head (20) configured to discharge the curable ink composition (21), and irradiating, from an irradiator (30), the curable ink composition (21) discharged onto the build surface (11) with the active energy rays (31), while moving the build stage (10) relative to the irradiator (30). The discharge head (20) is arranged in a direction intersecting the build surface (11) on which the formed object (M) is three-dimensionally formed. The irradiator (30) is arranged in a direction intersecting the build surface (11) and arranged side by side with the discharge head (20) along a moving direction of the build stage (10), the irradiator (30) being movable.

## Description

### BACKGROUND

### 1. Technical Field

The present invention relates to a method of manufacturing a three-dimensional formed object and a system for manufacturing a three-dimensional formed object.

### 2. Description of Related Art

In conventional three-dimensional formed objects, a cured material obtained by irradiating an ink containing a photocurable composition with light is used. By employing a plurality of inks, such as clear inks and colored inks, full-color three-dimensional molding can be achieved. For example, Japanese Patent No. 7423658 (hereinafter "Patent Document 1") discloses a technique in which a photocurable composition containing a polymerizable material and a photoinitiator is applied to a substrate and irradiated with ultraviolet (UV) light to form a stack of photocured layers.

In forming such a three-dimensional object, ink supplied to a build stage hardens as the build stage moves beneath a light source such as a UV lamp. Although the UV irradiation time varies depending on the moving speed of the build stage during formation, the build stage is preferably moved as quickly as possible in view of the manufacturability of the object.

On the other hand, in the case of manufacturing a three-dimensional object by a material jetting method (hereinafter, "MJT method"), inks are diversified, including high-strength inks, high-transparency inks, pigment inks, and the like.

### SUMMARY

According to the present disclosure, a method of manufacturing a three-dimensional formed object in which a formed object is three-dimensionally formed using a curable ink composition that is cured by active energy rays, the method includes discharging the curable ink composition onto a build surface of a movable build stage from a discharge head configured to discharge the curable ink composition, the discharge head being arranged in a direction intersecting the build surface of the build stage on which the formed object is three-dimensionally formed; and irradiating, from an irradiator, the curable ink composition discharged onto the build surface with the active energy rays, while moving the build stage relative to the irradiator, the irradiator being arranged in a direction intersecting the build surface of the build stage and arranged side by side with the discharge head along a moving direction of the build stage, the irradiator is being movable. An intensity of the active energy rays used to irradiate the curable ink composition is 1,900 mW/cm² or more and 3,400 mW/cm² or less. A relative speed between the build stage and the irradiator is 100 mm/s or higher and 300 mm/s or lower.

### BRIEF DESCRIPTION OF THE DRAWINGS

FIG. 1 is a schematic diagram illustrating a manufacturing system for a three-dimensional formed object; and
FIG. 2 is a process diagram illustrating a manufacturing method of a three-dimensional formed object.

### DETAILED DESCRIPTION

When diversified inks are used for a three-dimensional formed object, the reactivity differs depending on the type of photocurable monomer included in the ink, and the transmittance of UV light to the object differs depending on the difference of fillers dispersed in the ink. Therefore, under the same UV irradiation condition, curing failure occurs, and mechanical strength of the resulting three-dimensional formed object may be reduced.

The present disclosure has an object to provide a method of manufacturing a three-dimensional formed object that enhances mechanical strength of the formed object without reducing manufacturability.

According to the present disclosure, it is possible to provide a method of manufacturing a three-dimensional formed object that enhances mechanical strength of the formed object without reducing manufacturability.

Embodiments of the present disclosure will now be described with reference to the accompanying drawings. In the present specification, the XYZ three-dimensional orthogonal coordinate system is used, and the direction in which a build stage moves or the direction in which a discharge head and an irradiator are aligned is the X-axis direction, the width direction of the build stage is the Y-axis direction, and the direction orthogonal to a build surface of the build stage is the Z-axis direction. In each direction, a degree of deviation that does not impair the operation and effect of the embodiment is allowed. The term "orthogonal" may include substantially orthogonal.

### <System for Manufacturing Three-Dimensional Formed Object>

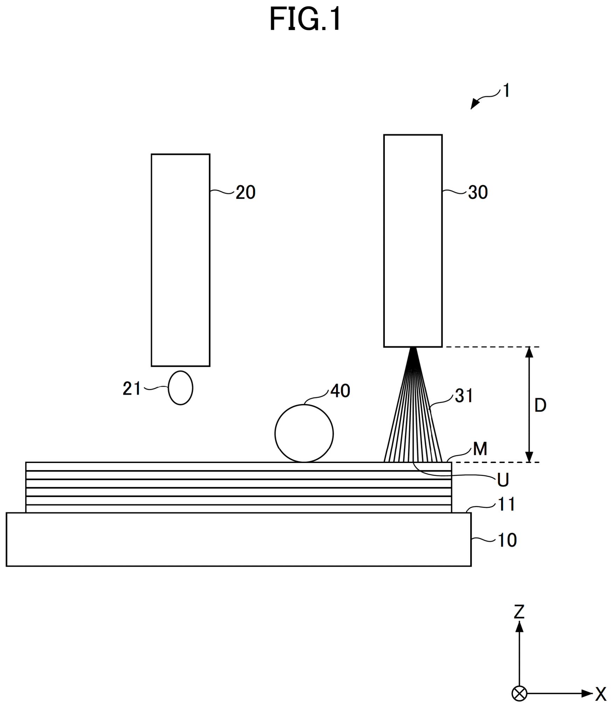

FIG. 1 is a schematic diagram illustrating a system for manufacturing a three-dimensional formed object according to the present embodiment. A system 1 illustrated in FIG. 1 is a system for manufacturing a three-dimensional formed object that three-dimensionally forms a formed object M using a curable ink composition 21 that is cured by active energy rays 31. The system for manufacturing a three-dimensional formed object of the present disclosure can implement, for example, a method of manufacturing a three-dimensional formed object according to the present embodiment, which is described later.

The system 1 includes a build stage 10, a discharge head 20, and an irradiator 30. The system 1 may further include a smoothing roller 40.

The build stage 10 includes a build surface 11 on which a formed object M is three-dimensionally formed. The build stage 10 is movably arranged in the system 1. In the example illustrated in FIG. 1, the moving direction of the build stage 10 corresponds to the X-axis direction. The build stage 10 may have an elevating and lowering function and be movably arranged in the vertical direction (Z-axis direction). The build stage 10 may be movably arranged in the depth direction (Y-axis direction).

The build stage 10 may be moved by a carriage (not illustrated) arranged in the system 1. The carriage may be driven by an engine (not illustrated) arranged in the system 1.

The discharge head 20 discharges the curable ink composition 21 onto the build surface 11 of the build stage 10.

The viscosity of the curable ink composition 21 is preferably low, from the viewpoint of the stability of discharge from a nozzle (not illustrated) of the discharge head 20. In the present embodiment, the viscosity of the curable ink composition 21 is preferably 400 mPa·s or less, more preferably 300 mPa·s or less, and more preferably 200 mPa·s or less in an environment of 25 °C. The viscosity of the curable ink composition 21 is preferably 10 mPa·s or more in an environment of 25 °C, from the viewpoint of the stability of discharge and the forming accuracy.

During formation, the viscosity of the curable ink composition 21 can be adjusted by adjusting the temperature of the discharge head 20 and the flow path to the discharge head 20. The viscosity can be measured, for example, by a viscometer (cone-plate type rotary viscometer, VISCOMETER TVE-22L, manufactured by Toki Sangyo Co., Ltd.) using a cone rotor (1°34'×R24) at a rotation speed of 50 revolutions per minute (rpm) and a temperature of the constant temperature circulating water at 25 °C.

The curable ink composition 21 is not particularly limited, but preferably contains a monomer having a methacryloyl group. A monomer having a methacryloyl group generally exhibits a lower polymerization rate than a monomer having an acryloyl group. In an MJT method, the ultraviolet (UV) irradiation time, which depends on the movement of a build stage, tends to be shortened. For this reason, monomers having an acryloyl group have conventionally been selected over monomers having a methacryloyl group, since the latter are more likely to cause curing failure.

However, a monomer having a methacryloyl group undergoes polymerization and curing upon light irradiation, and the presence of a methyl group at the α-position of a double-bond carbon increases the rigidity of the polymer chain. As a result, the cured product exhibits high mechanical strength. Accordingly, by using a curable ink composition 21 containing a monomer having a methacryloyl group, a three-dimensional formed object with enhanced mechanical strength can be obtained.

A monomer having a methacryloyl group is not particularly limited, but preferably has a bisphenol structure and/or a urethane structure. By using a monomer having a bisphenol structure and/or a urethane structure as a monomer having a methacryloyl group, the mechanical strength of the three-dimensional formed object can be enhanced even when a plurality of curable ink compositions 21 are cured simultaneously during curing.

The content of the monomer having a methacryloyl group in the curable ink composition 21 is not particularly limited, but is preferably 55 mass% or more, more preferably 80 mass% or more, and most preferably 100 mass% excluding components other than the monomer, such as fillers and initiators. When the content of the monomer having a methacryloyl group in the curable ink composition 21 falls within the preferred ranges, the mechanical strength of the resulting three-dimensional formed object can be maintained at a high level.

The curable ink composition 21 may contain a polymerization initiator. The polymerization initiator is not particularly limited, provided that it can generate an active species such as a radical or a cation upon irradiation with active energy rays 31, thereby initiating polymerization of monomers or oligomers. Preferably, the polymerization initiator is a phosphine oxide. The phosphine oxide is a phosphorus compound having a double bond (P=O bond) between a phosphorus atom and an oxygen atom.

Examples of the phosphine oxide include diphenyl (2,4,6-trimethylbenzoyl) phosphine oxide, triphenyl phosphine oxide, phenyl bis (2,4,6-trimethylbenzoyl) phosphine oxide, tri-n-octylphosphine oxide, and the like. Among these, diphenyl (2,4,6-trimethylbenzoyl) phosphine oxide is preferable from the viewpoint of reducing residue after curing. These may be used alone or two or more may be used in combination.

The content of the polymerization initiator in the curable ink composition 21 is not particularly limited, but is preferably 0.1 mass% to 20 mass%, more preferably 0.5 mass% to 10 mass%, and most preferably 1 mass% to 5 mass%. When the content of the polymerization initiator in the curable ink composition 21 falls within the preferred ranges, the polymerization efficiency during curing of the curable ink composition 21 is improved, and curing failure of the three-dimensional formed object can be suppressed. If the content of the polymerization initiator is too large, there is a possibility that the color tone of the formed object is affected by an increase in decomposition residues.

As the curable ink composition 21, for example, one or more types of clear ink, white ink, or color ink containing pigments such as cyan, magenta, and yellow can be used.

The curable ink composition 21 can be prepared by charging the ink composition to a dispersing machine such as an agitation defoamer, a homogenizer, a ball mill, a bead mill, a disk mill, a pin mill, a dyno mill, or the like, and dispersing the ink composition.

The curable ink composition 21 may contain an inorganic filler. By containing the inorganic filler, the curable ink composition 21 can serve as a white ink for forming a three-dimensional formed object. Furthermore, the inclusion of the inorganic filler can enhance the mechanical strength of the resulting three-dimensional formed object.

Examples of the inorganic filler include silica, talc, titanium oxide, calcium carbonate, magnesium oxide, and the like. The inorganic filler may be used alone or in combination of two or more types. Among these, silica is preferable. The silica is preferably surface-modified spherical silica.

The content of the inorganic filler in the curable ink composition 21 is not particularly limited, but is preferably from 1 mass% to 60 mass%, more preferably from 5 mass% to 50 mass%, and most preferably from 10 mass% to 40 mass%. When the content of the inorganic filler in the curable ink composition 21 falls within the preferred ranges, the mechanical strength of the resulting three-dimensional formed object can be enhanced.

The particle size of the inorganic filler is not particularly limited, but is preferably from 10 nm to 500 nm, more preferably from 50 nm to 400 nm, and most preferably from 100 nm to 300 nm in terms of the volume average primary particle size. When the volume average primary particle size of the inorganic filler is from 10 nm to 500 nm, the mechanical strength of the resulting three-dimensional formed object can be maintained at a high level.

The curable ink composition 21 may contain other components as required. The other components are not particularly limited, but include, for example, a surfactant, a polymerization inhibitor, a leveling agent, a defoaming agent, a fluorescent brightener, a penetration accelerator, a wetting agent (humectant), a fixing agent, a viscosity stabilizer, an antifungal agent, a preservative, an antioxidant, a UV absorber, a chelating agent, a pH regulator, a thickener, and the like.

The discharge head 20 is arranged so as to intersect the build surface 11 of the build stage 10. In the present disclosure, the discharge head 20 is arranged above the build stage 10 at a position perpendicular to the build surface 11. The discharge head 20 can reciprocate along the moving direction (X-axis direction) of the build stage 10 by a carriage (not illustrated) arranged in the system 1.

The discharge head 20 may be composed of a pair of head units (not illustrated). For example, among the pair of head units, one head unit ejects a material for forming a model part (model part forming material) when a three-dimensional formed object is formed, and the other head unit ejects a material for forming a support part for supporting the model part (support part forming material) when a three-dimensional formed object is formed.

One head unit may eject clear ink, and the other head unit may eject white ink or color ink. When a plurality of model part forming materials in different colors are used, the discharge head 20 may be provided with multiple head units for ejecting model part forming materials in the respective colors.

In order to prevent drying of the curable ink composition 21 when the system 1 is at rest, a cover part (not illustrated), such as a cap, may be provided for closing the nozzle (not illustrated) of the discharge head 20. In order to prevent clogging of the nozzle (not illustrated) of the discharge head 20 when the system 1 is continuously used for a long time, a maintenance mechanism for maintaining the discharge head 20 may be provided inside or outside the system 1.

The discharge head 20 is preferably an inkjet head. For example, a nozzle of a conventional inkjet printer can be used as a nozzle in the head unit of the discharge head 20.

With an inkjet method, the curable ink composition 21 can be ejected by using an inkjet head as the discharge head 20. The ejection method by the inkjet method is not particularly limited, and examples include a continuous ejection type, an on-demand type, and the like. Examples of the on-demand type include a piezo type, a thermal type, an electrostatic type, and the like.

From the viewpoint of ejection stability and forming accuracy, when the discharge head 20 is an inkjet head, the curable ink composition 21 preferably has a static surface tension of 20 mN/m or more and 40 mN/m or less in an environment of 25 °C. The static surface tension can be measured by a common method, and examples of methods for measuring the static surface tension include a plate method, a ring method, a pendant drop method, and the like.

When the curable ink composition 21 is ejected by an inkjet method to form a three-dimensional formed object, a plurality of curable ink compositions 21 can be ejected simultaneously, thereby enabling various three-dimensional shapes. In addition, since layers of the curable ink composition 21 can be formed in plane units, a plurality of formed objects W can be manufactured simultaneously. Furthermore, since the layer pitch is fine and thin layers can be stacked, highly precise three-dimensional object forming can be achieved.

The curable ink composition 21 may be contained in a container (not illustrated). The container of the present disclosure is a container in which the curable ink composition 21 is contained. The container is installed in the system 1 and connected to the discharge head 20 so as to supply the curable ink composition 21.

The container in which the curable ink composition 21 is contained can be used as a cartridge and a bottle. Thus, it is not necessary to directly touch the curable ink composition 21 at the time of conveyance, exchange, or the like, and it is possible to prevent staining of fingers and clothes. In addition, it is possible to prevent foreign matter such as dust from entering the curable ink composition 21.

Furthermore, the shape, size, material, or the like of the container itself may be suitable for the purpose and usage, and is not particularly limited, but it is desirable that the material be a light shielding material that does not transmit light or that the container be covered with a light shielding sheet or the like.

The irradiator 30 irradiates the curable ink composition 21, which has been discharged onto the build surface 11 of the build stage 10, with active energy rays 31. Upon irradiation, the curable ink composition 21 undergoes curing through a polymerization reaction. For example, the irradiator 30 irradiates the discharged model part forming material and support part forming material with active energy rays 31, such as UV rays, thereby curing these materials.

The irradiator 30 is movably arranged in the system 1. In the example illustrated in FIG. 1, the moving direction of the irradiator 30 can correspond to any of the X-axis direction, the Y-axis direction, and the Z-axis direction.

The irradiator 30 is arranged so as to intersect the build surface 11 of the build stage 10 and arranged side by side with the discharge head 20 along the moving direction (X-axis direction) of the build stage 10. In the present disclosure, the irradiator 30 is provided above the build stage 10 and at a position perpendicular to the build surface 11, with a predetermined interval in the moving direction (X-axis direction) of the discharge head 20 and the build stage 10.

The active energy rays 31 emitted from the irradiator 30 are not particularly limited, but light is preferable, and UV light having a wavelength from 220 nm to 400 nm is more preferable. In particular, when a high-energy light source is used, a polymerization reaction can proceed without using a polymerization initiator.

When the active energy rays 31 to be emitted are UV light, a UV lamp is used for the irradiator 30. In the case of UV irradiation, mercury-free devices are strongly desired from the viewpoint of environmental protection, and replacement with GaN-based semiconductor ultraviolet light-emitting devices is very useful industrially and environmentally. An ultraviolet light-emitting diode (UV-LED) and an ultraviolet laser diode (UV-LD) are small in size, long in life, high in efficiency, and low in cost, and are preferred as ultraviolet light sources.

The smoothing roller 40 smooths the curable ink composition 21 discharged onto the build surface 11 of the build stage 10. The smoothing roller 40 is arranged so as to intersect the build surface 11 of the build stage 10 and is arranged side by side between the discharge head 20 and the irradiator 30 along the moving direction (X-axis direction) of the build stage 10.

In the present disclosure, the smoothing roller 40 is provided above the build stage 10 at a position perpendicular to the build surface 11 between the discharge head 20 and the irradiator 30 such that the smoothing roller 40 can be brought into contact with the curable ink composition 21 discharged onto the build surface 11. The smoothing roller 40 smooths, for example, a liquid film of a model part forming material and a liquid film of a support part forming material.

When the smoothing roller 40 is used, the discharge head 20 forms layers of the curable ink composition 21 while the build stage 10 is moved downward in accordance with the number of formed layers in order to maintain a constant gap between the smoothing roller 40 and the surface of the formed object M. The smoothing roller 40 is preferably adjacent to the irradiator 30 from the viewpoint of improving polymerization efficiency in curing the curable ink composition 21.

The smoothing roller 40 is made of metal or ceramic. Metals used for the smoothing roller 40 include SUS300, SUS400, SUS600, hexavalent chromium, tungsten carbide, and the like. Ceramics used for the smoothing roller 40 include silicon nitride. One of these metals or ceramics coated with fluorine or silicone may be used for the roller. Among these, SUS600 is preferable in terms of strength and workability.

In the system 1, excess portions of the curable ink composition 21 discharged onto the build surface 11 of the build stage 10 are scraped off by the smoothing roller 40, so that unevenness of the liquid film or layer composed of the curable ink composition 21 can be smoothed. Thus, it is easy to form a three-dimensional object composed of a laminate of cured layers obtained by curing the curable ink composition 21.

In the system 1 of the present disclosure, the intensity of the active energy rays 31 used to irradiate the curable ink composition 21 discharged onto the build surface 11 is from 1,900 mW/cm² to 3,400 mW/cm², preferably from 2,000 mW/cm² to 3,300 mW/cm², and more preferably from 2,100 mW/cm² to 3,200 mW/cm².

In the present specification, the intensity of the active energy rays 31 used to irradiate the curable ink composition 21 indicates the intensity of the active energy rays 31 measured on the build surface when the build surface is irradiated with the active energy rays 31 from an irradiator such as a UV lamp provided at a discretionarily chosen distance D from the build surface of the build stage (see FIG. 1).

The active energy rays 31 can be measured by a known active energy ray measuring device, such as an ultraviolet illuminometer. For example, the detection part of the active energy ray measuring device is adjusted to the same gap as a distance D between the irradiator 30 and the build surface 11 of the build stage 10, and the intensity of the active energy rays 31 is measured at a position U immediately below the irradiator 30 (see FIG. 1).

In the system 1, the relative speed between the build stage 10 and the irradiator 30 is from 100 mm/s to 300 mm/s, preferably from 102 mm/s to 280 mm/s, and more preferably from 104 mm/s to 260 mm/s.

In the present specification, the relative speed between the build stage 10 and the irradiator 30 indicates a speed at which the build surface 11 of the build stage 10 moves relative to the irradiator 30. Therefore, in the system 1 of the present disclosure, the relative speed is not limited to the relative speed when only the build stage 10 moves, but may be the relative speed when the irradiator 30 moves but the build stage 10 does not move, or the relative speed when both the build stage 10 and the irradiator 30 move.

In the system 1 of the present disclosure, since the intensity of the active energy rays 31 used to irradiate the curable ink composition 21 discharged onto the build surface 11 of the build stage 10 is 1,900 mW/cm² or more and 3,400 mW/cm² or less and the relative speed between the build stage and the irradiator is 100 mm/s or higher and 300 mm/s or lower, even when a plurality of types of curable ink compositions 21, such as curable ink compositions 21 having different light transmissibilities, curable ink compositions 21 in which a large amount of filler is dispersed, and curable ink compositions 21 containing pigments, are simultaneously cured, curing failure can be suppressed, and a three-dimensional formed object having high mechanical strength can be obtained.

In the system 1 of the present disclosure, after the build stage 10 is relatively moved with respect to the irradiator 30, it may be relatively moved in a direction opposite to the direction in which the build stage 10 has moved. Thus, the build surface 11 of the build stage 10 onto which the curable ink composition 21 has been discharged can pass below the irradiator 30 that emits the active energy rays 31 and then pass below the irradiator 30 again.

In the present specification, the direction in which the build stage 10 is relatively moved with respect to the irradiator 30 indicates the direction in which the build surface 11 is separated from the discharge head 20 in the moving direction (X-axis direction) of the build stage 10. The direction opposite to the direction in which the build stage 10 has moved indicates the direction in which the build surface 11 approaches the discharge head 20 in the moving direction (X-axis direction) of the build stage 10.

In the system 1 of the present disclosure, the curable ink composition 21 discharged onto the build surface 11 of the build stage 10 can be irradiated with a sufficient amount of the active energy rays 31 without unevenness by relatively moving the build stage 10 in the direction opposite to the direction in which the build stage 10 is moved. Therefore, even when a plurality of types of curable ink compositions 21 are simultaneously cured during formation of a three-dimensional formed object, the curing failure can be suppressed.

### <Method of Manufacturing Three-Dimensional Formed Object>

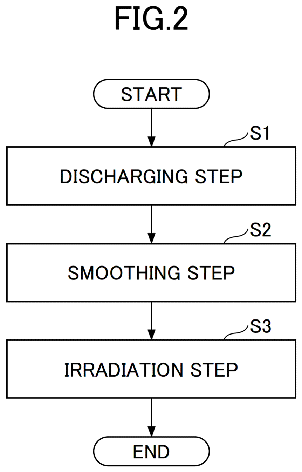

FIG. 2 is a process diagram illustrating a method of manufacturing a three-dimensional formed object. The method illustrated in FIG. 2 is a method of manufacturing a three-dimensional formed object in which a formed object M is three-dimensionally formed by using the curable ink composition 21 that is cured by the active energy rays 31. The method of manufacturing a three-dimensional formed object of the present disclosure can be implemented, for example, by using the above-described system for manufacturing a three-dimensional formed object according to the present embodiment.

Hereinafter, the method of manufacturing a three-dimensional formed object will be described by using the system for manufacturing a three-dimensional formed object according to the present embodiment illustrated in FIG. 1. The method of manufacturing a three-dimensional formed object of the present disclosure includes a discharging step S1 and an irradiation step S3, as illustrated in FIG. 2. The method of manufacturing the three-dimensional formed object may further include a smoothing step S2.

In the discharging step S1, as illustrated in FIG. 1, the curable ink composition 21 is discharged onto the build surface 11 of the build stage 10 from the discharge head 20. The discharge head 20 is arranged so as to intersect the build surface 11 of the movable build stage 10, on which the formed object M is three-dimensionally formed, and discharges the curable ink composition 21.

The curable ink composition 21 discharged in the discharging step S1 is not particularly limited, but is preferably the above-mentioned curable ink composition 21.

In the discharging step S1, the discharge head 20 is preferably an inkjet head. By using an inkjet head as the discharge head 20, the curable ink composition can be discharged by an inkjet method.

By employing the inkjet method in the discharging step S1, a plurality of curable ink compositions 21 can be discharged simultaneously when forming a three-dimensional formed object, thereby enabling the formation of various three-dimensional shapes. Since layers can be stacked in plane units, a plurality of formed objects can be manufactured simultaneously. Furthermore, since the layer pitch is fine and thin layers can be stacked, highly precise three-dimensional object forming can be achieved.

In the irradiation step S3, as illustrated in FIG. 1, while the build stage 10 is moved relative to the irradiator 30, the irradiator 30 irradiates the curable ink composition 21 discharged onto the build surface 11 with the active energy rays 31. The irradiator 30 is arranged movably in the direction intersecting the build surface 11 of the build stage 10 and is arranged side by side with the discharge head 20 along the moving direction (X-axis direction) of the build stage 10.

In the irradiation step S3, the active energy rays 31 emitted from the irradiator 30 are not particularly limited, but light is preferable, and UV rays having a wavelength from 220 nm to 400 nm are more preferable. In particular, when a high-energy light source is used, a polymerization reaction can proceed without using a polymerization initiator.

In the irradiation step S3, when the active energy rays 31 to be emitted are UV rays, a UV lamp is used as the irradiator 30.

In the smoothing step S2, the curable ink composition 21 discharged onto the build surface 11 of the build stage 10 is smoothed. In the smoothing step S2, as illustrated in FIG. 1, the curable ink composition 21 discharged onto the build surface 11 of the build stage 10 is smoothed by the smoothing roller 40 provided at a position perpendicular to the build surface 11 between the discharge head 20 and the irradiator 30 above the build stage 10 such that the smoothing roller 40 can be brought into contact with the curable ink composition 21 discharged onto the build surface 11.

In the smoothing step S2, excess portions of the curable ink composition 21 discharged onto the build surface 11 of the build stage 10 are scraped off by performing such smoothing, thereby smoothing the unevenness of the liquid film or layers composed of the curable ink composition 21. Thus, it is easy to form a three-dimensional formed object composed of a laminate of cured layers obtained by curing the curable ink composition 21.

In the method of manufacturing a three-dimensional formed object of the present disclosure, the intensity of the active energy rays 31 used to irradiate the curable ink composition 21 in the irradiation step S3 is from 1,900 mW/cm² to 3,400 mW/cm², preferably from 2,000 mW/cm² to 3,300 mW/cm², and more preferably from 2,100 mW/cm² to 3,200 mW/cm².

Furthermore, in the method of manufacturing a three-dimensional formed object of the present disclosure, the relative speed between the build stage 10 and the irradiator 30 is from 100 mm/s to 300 mm/s, preferably from 102 mm/s to 280 mm/s, and more preferably from 104 mm/s to 260 mm/s.

White ink contains a bisphenol monomer having low light transmission and a slow reaction. Clear ink, on the other hand, contains a monomer having high light transmission and a faster reaction than white ink. Materials containing a large amount of pigments such as cyan, magenta, and yellow also have different curability from clear ink. In some cases, they are mixed and cured in order to reproduce full color.

If the forming speed of a three-dimensional formed object (UV lamp passing time) is too high, the exposure time to a UV lamp becomes short, which can result in insufficient curing of white ink. Conversely, if the UV intensity is increased to compensate for a reduced irradiation time, the decomposition of a polymerization initiator accelerates, but the termination reaction also proceeds at a rate proportional to the square of a radical concentration. Therefore, if the growth radical concentration becomes too high under strong light irradiation conditions, the termination reaction also accelerates, causing polymerization to proceed incompletely and resulting in insufficient curing. Accordingly, simply increasing the UV irradiation intensity is not an effective countermeasure.

In contrast, in the method of manufacturing the three-dimensional formed object of the present disclosure, since the intensity of the active energy rays 31 used to irradiate the curable ink composition 21 discharged onto the build surface 11 of the build stage 10 is 1,900 mW/cm² or more and 3,400 mW/cm² or less, and the relative speed between the build stage 10 and the irradiator 30 is 100 mm/s or higher and 300 mm/s or lower, even if a plurality of types of curable ink compositions 21, such as curable ink compositions 21 having different light transmittances, curable ink compositions 21 having a large amount of dispersed fillers, and curable ink compositions 21 containing pigments, are cured simultaneously, poor curing can be suppressed, and a three-dimensional formed object having high mechanical strength can be obtained.

In the method of manufacturing a three-dimensional formed object of the present disclosure, in the irradiation step S3, the build stage 10 may be moved relative to the irradiator 30 and then moved relatively in the direction opposite to its previous movement. As a result, the build surface 11 of the build stage 10 onto which the curable ink composition 21 is discharged passes below the irradiator 30 that emits the active energy rays 31 and then passes again below the irradiator 30.

In the method of manufacturing a three-dimensional formed object, by relatively moving the build stage 10 in the direction opposite to its previous movement as described above, the curable ink composition 21 discharged onto the build surface 11 of the build stage 10 in the discharging step S1 can be irradiated with a sufficient amount of active energy rays 31 in the irradiation step S3 without unevenness. Accordingly, even when a plurality of types of curable ink compositions 21 are cured simultaneously during the formation of a three-dimensional formed object, curing failure can be suppressed.

In the method of manufacturing a three-dimensional formed object of the present disclosure, a three-dimensional formed object of a desired shape can be manufactured by sequentially repeating the discharging step S1 and the irradiation step S3. The process of forming a formed object M (cured object) by sequentially repeating the discharging step S1 and the irradiation step S3 in the manufacturing method according to the present disclosure, which is performed in the system 1 according to the present disclosure, will be described below.

In the irradiation step S3, while moving the carriage (not illustrated) or the build stage 10, droplets of the model part forming material are ejected from one head unit of the discharge head 20, and droplets of the support part forming material are ejected from the other head unit, based on two-dimensional data corresponding to a bottom-most cross section among the input two-dimensional data.

Thus, the droplets of the model part forming material are arranged at positions corresponding to pixels indicating the model part in the two-dimensional data corresponding to the bottom-most cross section, the droplets of the support part forming material are arranged at positions corresponding to pixels indicating the support part in the two-dimensional data corresponding to the bottom-most cross section, thereby forming a liquid film in which droplets at adjacent positions come into contact with each other.

When a single formed object is formed, a liquid film having a cross-sectional shape is formed in the center of the build stage 10. When more than one formed object is formed, in the system 1, a plurality of liquid films having respective cross-sectional shapes may be formed on the build stage 10, or liquid films may be stacked on an object formed in advance.

Heaters are preferably provided in a pair of head units of the discharge head 20. Furthermore, preheaters are preferably provided in a path for supplying a model part forming material to one head unit and a path for supplying a support part forming material to the other head unit.

In the smoothing step S2, the smoothing roller 40 scrapes off excess portions of the model part forming material and the support part forming material discharged onto the build stage 10, thereby smoothing the unevenness of the liquid film or layer composed of the model part forming material and the support part forming material.

The smoothing step S2 may be performed once for each layer in the vertical direction (Z-axis direction) or once for approximately every 2 to 50 layers. In the smoothing step S2, the smoothing roller 40 may be stopped or rotated at a positive or negative relative speed with respect to the advancing direction of the build stage 10.

The rotation speed of the smoothing roller 40 may be a constant speed, a constant acceleration, or a constant deceleration. The rotation speed of the smoothing roller 40 is preferably 50 mm/s or higher and 1,000 mm/s or lower, expressed as the absolute value of the relative speed with respect to the build stage 10. If the relative speed is too low, smoothing is insufficient and smoothness is impaired. Conversely, if the relative speed is too high, displacement of the ejected droplets is likely to occur due to vibration or the like, and as a result, smoothness may be degraded.

In the smoothing step S2, it is preferable that the rotating direction of the smoothing roller 40 be opposite to the advancing direction of the pair of head units of the discharge head 20.

In the irradiation step S3, a UV irradiator 33 is moved by a carriage 35, and the liquid film, which has been formed in the discharging step S1, is irradiated with UV light of a wavelength corresponding to the wavelength of the photopolymerization initiator contained in the model part forming material and the support part forming material. Thus, the irradiator 30 hardens the liquid film to form a layer.

After the formation of the bottom-most layer, the build stage 10 is lowered by one layer. While moving the carriage or the build stage 10, the droplets of the model part forming material are ejected, and the droplets of the support part forming material are ejected, based on two-dimensional image data corresponding to the second cross section from the bottom. The ejection method is the same as when the bottom-most liquid film is formed.

Thus, a liquid film having a cross-sectional shape corresponding to the second two-dimensional data from the bottom is formed on the bottom-most layer. Furthermore, the UV irradiator 33 is moved by a carriage to irradiate the liquid film with UV rays, thereby curing the liquid film and forming a second layer from the bottom on the layer closest to the bottom.

In the system 1, the formation and curing of the liquid film are repeated in the same manner as described above by using the input two-dimensional data in order from the data closest to the bottom, thereby stacking layers. The number of repetitions varies depending on the number of input two-dimensional image data items or the height and shape of a three-dimensional model. When the forming using all the two-dimensional image data is completed, a formed object M of a model part in a state supported by a support part is obtained.

The formed object M formed by the system 1 has a model part and a support part. The support part is removed from the formed object M after the formation. As the removal method, a physical removal method and a chemical removal method can be employed.

In physical removal, mechanical force is applied to remove the support. On the other hand, in chemical removal, the support is immersed in a solvent to disintegrate the support. Although there is no particular limitation as a method of removing the support, chemical removal is more preferable because physical removal may damage formed objects. In consideration of cost, a method of removing the support by immersing it in water is more preferable. When the method of removing the support by immersing it in water is adopted, a cured material of the support part forming material having a water disintegration property is selected.

The three-dimensional formed object manufactured by the manufacturing system and the manufacturing method of the present disclosure has high mechanical strength and biocompatibility, and can be suitably used for dental materials such as artificial teeth. Incidentally, in the present specification, an artificial tooth refers to an artificially formed tooth used to restore the function of a natural tooth lost due to caries, trauma, periodontal disease, or the like, or a laminate attached to the surface of a natural tooth to enhance aesthetics. Dental materials used for a part of a tooth include, for example, an inlay, an onlay, a crown, a bridge, and the like. Dental materials used for all teeth include, for example, implants, dentures, and the like.

The three-dimensional formed object can be suitably used not only for dental materials such as artificial teeth, but also for spectacle frames, outsoles of shoes, middle soles, grip portions such as handles, hearing aids, earphones, denture floors, prostheses, and the like.

### [Examples]

Examples of the present embodiment will be described below, but the present invention is not limited by these examples. Unless otherwise specified, "parts" in the following are mass standards. Various tests and evaluations for Examples and Comparative Examples are conducted according to the following methods.

### [Curable Ink Composition]

### <White Ink>

42 parts of ethoxylated bisphenol A dimethacrylate (BPE-100/D-2.6E, manufactured by Shin-Nakamura Chemical Industry Co., Ltd.), 28 parts of triethylene glycol dimethacrylate (NK Ester 3G, manufactured by Shin-Nakamura Chemical Industry Co., Ltd.) and 30 parts of silica (Adma Nano (registered trademark) KC180G-SM1, manufactured by Admatex, volume average primary particle diameter of 180 nm) as an inorganic filler were mixed. Next, 3 parts of diphenyl (2,4,6-trimethylbenzoyl) phosphine oxide (Omunirad TPO H, manufactured by BASF) as a photopolymerization initiator were added and mixed. Then, the mixture was filtered through a filter to obtain a white ink as a curable ink composition.

### <Clear Ink>

42 parts of 1,6-bis(methacryloyloxy-2-ethylcarbamoyl)-2,4,4-trimethylhexane (urethane dimethacrylate) (manufactured by Sigma-Aldrich Co.) were mixed with 28 parts of diethylene glycol dimethacrylate (NK Ester 2G, manufactured by Shin-Nakamura Chemical Industry Co., Ltd.) and 30 parts of silica particles (Adma Nano (registered trademark) Y100SM-C6, manufactured by Admatex, volume average primary particle size of 100 nm) as an inorganic filler. Next, 3 parts of diphenyl (2,4,6-trimethylbenzoyl) phosphine oxide (Omunirad TPO H, manufactured by BASF ) were added as a photopolymerization initiator and mixed. Then, the mixture was filtered through a filter to obtain a clear ink as a curable ink composition.

### <Total light transmittance (Tt)>

The total light transmittance (Tt) of the obtained ink was evaluated using a direct-reading haze meter (manufactured by Toyo Seiki), following ASTM D1003 and ISO 13468-1 (2019). Measurements were performed on samples with dimensions of 1 mm (t) × 25 mm (w) × 25 mm (l). The total light transmittance (Tt) of the white ink was 28 %, and the total light transmittance (Tt) of the clear ink was 78 %.

### [Production of Three-Dimensional Formed Object]

A three-dimensional formed object was produced using a curable ink composition (white ink, clear ink) according to the manufacturing method illustrated in FIG. 2. In the discharging step, an inkjet head was used as the discharge head. In the irradiation step, a UV lamp was used as the irradiator, and the curable ink composition discharged on the formed surface of the build stage was irradiated with UV rays as active energy rays while the build stage was passed by the UV lamp at a predetermined speed (relative speed between the build stage and the irradiator).

### [Intensity of Active Energy Rays]

The intensity of the active energy rays used to irradiate the curable ink composition was determined as the intensity of the active energy rays measured on the build surface of the build stage when the build surface was irradiated with the active energy rays from a UV lamp provided at an arbitrary distance from the build surface. The active energy rays were measured using an ultraviolet illuminometer. The detection part of the ultraviolet illuminometer was adjusted to the same gap as the distance between the irradiator and the build surface of the build stage, and the measurement was performed just below the irradiator.

### [Flexural Strength]

A universal testing machine (Autograph AG-I, manufactured by Shimadzu) was used, and a 1 kN load cell and a 3-point bending jig were used. The distance between fulcrums was 20 mm, and the flexural strength of the three-dimensional object was measured by plotting the stress when the load point was displaced at a speed of 1 mm/min against the strain amount. The stress at the break point was regarded as the maximum stress. The flexural strength was evaluated according to the following criteria.

### [Evaluation Criteria]

### <Flexural Strength of White Ink>

S (Excellent): 130 MPa or more
A (Good): 120 MPa or more and less than 130 MPa
B (Fair): 100 MPa or more and less than 120 MPa
C (Poor): less than 100 MPa

### <Flexural Strength of Clear Ink>

S (Excellent): 170 MPa or more
A (Good): 160 MPa or more and less than 170 MPa
B (Fair): 140 MPa or more and less than 160 MPa
C (Poor): less than 140 MPa

### [Forming Time (Manufacturability)]

The manufacturability of the three-dimensional formed object was evaluated by measuring the forming time (minutes) required when 500 layers were stacked where each layer has a thickness of 20 µm. The forming time (manufacturability) was evaluated based on the following criteria.

### [Evaluation Criteria]

S (Excellent): less than 180 minutes
A (Good): 180 minutes or more and less than 240 minutes
B (Fair): 240 minutes or more and less than 500 minutes
C (Poor): 500 minutes or more

Hereinafter, the conditions (product manufacturing conditions) of Examples and Comparative Examples will be described.

### (Example 1)

A formed object was obtained by setting the intensity of UV rays used to irradiate the curable ink composition at 2,106 mW/cm² and the passing speed of the UV lamp at 212 mm/s. Table 1 illustrates the manufacturing conditions and evaluation results of Example 1.

### (Example 2)

A formed object was obtained in the same manner as in Example 1, except that the intensity of UV rays used to irradiate the curable ink composition was set at 2,360 mW/cm². Table 1 illustrates the manufacturing conditions and evaluation results of Example 2.

### (Example 3)

A formed object was obtained in the same manner as in Example 1, except that the intensity of UV light used to irradiate the curable ink composition was set at 2,615 mW/cm². Table 1 illustrates the manufacturing conditions and evaluation results of Example 3.

### (Example 4)

A formed object was obtained in the same manner as in Example 1, except that the intensity of UV light used to irradiate the curable ink composition was set at 2,870 mW/cm². Table 1 illustrates the manufacturing conditions and evaluation results of Example 4.

### (Example 5)

A formed object as obtained in the same manner as in Example 1, except that the intensity of UV light used to irradiate the curable ink composition was set at 3,125 mW/cm2. Table 1 illustrates the manufacturing conditions and evaluation results of Example 5.

### (Example 6)

A formed object was obtained in the same manner as in Example 3, except that the UV lamp passing speed was set at 105 mm/s. Table 1 illustrates the manufacturing conditions and evaluation results of Example 6.

### (Example 7)

A formed object was obtained in the same manner as in Example 3, except that the UV lamp passing speed was set at 254 mm/s. Table 1 illustrates the manufacturing conditions and evaluation results of Example 7.

### (Comparative Example 1)

A formed object was obtained in the same manner as in Example 3, except that the UV lamp passing speed was set at 317 mm/s. Table 2 illustrates the manufacturing conditions and evaluation results of Comparative Example 1.

### (Comparative Example 2)

A formed object was obtained in the same manner as in Example 1, except that the intensity of UV light used to irradiate the curable ink composition was set at 3,525 mW/cm². Table 2 illustrates the manufacturing conditions and evaluation results of Comparative Example 2.

### (Comparative Example 3)

A formed object was obtained in the same manner as in Example 1, except that the intensity of UV light used to irradiate the curable ink composition was set at 1,886 mW/cm². Table 2 illustrates the manufacturing conditions and evaluation results of Comparative Example 3.

### (Comparative Example 4)

A formed object was obtained in the same manner as in Example 4, except that the UV lamp passing speed was set at 95 mm/s. Table 2 illustrates the manufacturing conditions and evaluation results of Comparative Example 4.

**[Table 1]**

| | | Example 1 | Example 2 | Example 3 | Example 4 | Example 5 | Example 6 | Example 7 |
|---|---|---|---|---|---|---|---|---|
| Manufacturing conditions for formed object | UV irradiation intensity [mW/cm²] | 2106 | 2360 | 2615 | 2870 | 3125 | 2615 | 2615 |
| | UV lamp passing speed [mm/sec] | 212 | 212 | 212 | 212 | 212 | 105 | 254 |
| Evaluation results | White ink flexural strength [MPa] | 120 | 126 | 132 | 128 | 120 | 133 | 104 |
| | | A | A | S | A | A | S | B |
| | Clear ink flexural strength [MPa] | 164 | 167 | 172 | 168 | 160 | 180 | 168 |
| | | A | A | S | A | A | S | A |
| | Time taken for forming 500 layers when each layer has thickness of *20 µ* m [minutes] | 230 | 230 | 230 | 230 | 230 | 475 | 190 |
| | | A | A | A | A | A | B | A |

**[Table 2]**

| | | Comparative Example 1 | Comparative Example 2 | Comparative Example 3 | Comparative Example 4 |
|---|---|---|---|---|---|
| Manufacturing conditions for formed object | UV irradiation intensity [mW/cm²] | 2615 | 3525 | 1886 | 2870 |
| | UV lamp passing speed [mm/sec] | 317 | 212 | 212 | 95 |
| Evaluation results | White ink flexural strength [MPa] | 98 | 84 | Surface Curing Failure | 132 |
| | | C | C | - | S |
| | Clear ink flexural strength [MPa] | 161 | 158 | 140 | 180 |
| | | A | B | B | S |
| | Time taken for forming 500 layers when each layer has thickness of 20 *µ* m [minutes] | 140 | 230 | 230 | 530 |
| | | S | A | A | C |

According to Table 1, in Examples 1 through 7, a formed object satisfying the conditions that the intensity of the active energy rays used to irradiate the curable ink composition discharged onto the building surface of the build stage is 1,900 mW/cm² or more and 3,400 mW/cm² or less, and the relative speed between the build stage and the irradiator is 100 mm/s or higher and 300 mm/s or lower, had a high flexural strength without lowering manufacturability when either white ink or clear ink was used.

On the other hand, according to Table 2, in Comparative Examples 1 and 2, a formed object not satisfying any of the conditions that the intensity of the active energy rays used to irradiate the curable ink composition discharged onto the build surface of the build stage is 1,900 mW/cm² or more and 3,400 mW/cm² or the relative speed between the build stage and the irradiator is 100 mm/s or higher and 300 mm/s or lower, had a low flexural strength when white ink was used.

In Comparative Example 3, a formed object not satisfying any of the conditions that the intensity of the active energy rays used to irradiate the curable ink composition discharged onto the build surface of the build stage is 1,900 mW/cm² or more and 3,400 mW/cm² or the relative speed between the build stage and the irradiator is 100 mm/s or higher and 300 mm/s or lower, had a curing failure when white ink was used.

Furthermore, in Comparative Example 4, when the relative speed between the build stage and the irradiator was lower than 100 mm/s, curing was possible, but manufacturability was lowered.

Although embodiments of the present invention have been described above, the present invention is not limited to any particular embodiment, and various alterations and modifications are possible within the scope of the invention described in the claims.

Aspects of the embodiments of the present invention are as follows.
<1> A method of manufacturing a three-dimensional formed object in which a formed object is three-dimensionally formed using a curable ink composition that is cured by active energy rays, the method including:
   discharging the curable ink composition onto a build surface of a movable build stage from a discharge head configured to discharge the curable ink composition, the discharge head being arranged in a direction intersecting the build surface of the build stage on which the formed object is three-dimensionally formed; and
   irradiating, from an irradiator, the curable ink composition discharged onto the build surface with the active energy rays, while moving the build stage relative to the irradiator, the irradiator being arranged in a direction intersecting the build surface of the build stage and arranged side by side with the discharge head along a moving direction of the build stage, the irradiator being movable, wherein
   an intensity of the active energy rays used to irradiate the curable ink composition is 1,900 mW/cm² or more and 3,400 mW/cm² or less, and
   a relative speed between the build stage and the irradiator is 100 mm/s or higher and 300 mm/s or lower.
<2> The method of manufacturing the three-dimensional formed object according to <1>, wherein the curable ink composition includes a monomer having a methacryloyl group.
<3> The method of manufacturing the three-dimensional formed object according to <2>, wherein the monomer having a methacryloyl group has a bisphenol structure or a urethane structure, or both a bisphenol structure and a urethane structure.
<4> The method of manufacturing the three-dimensional formed object according to any one of <1> to <3>, wherein the curable ink composition contains phosphine oxide as a polymerization initiator.
<5> The method of manufacturing the three-dimensional formed object according to any one of <1> to <4>, wherein the curable ink composition includes an inorganic filler.
<6> The method of manufacturing the three-dimensional formed object according to any one of <1> to <5> further including smoothing the curable ink composition discharged onto the build surface of the build stage.
<7> The method of manufacturing the three-dimensional formed object according to any one of <1> to <6>, wherein in the irradiating, the build stage is moved relative to the irradiator, and then moved relatively in a direction opposite to the previous movement of the build stage.
<8> The method of manufacturing a three-dimensional formed object according to any one of <1> to <7>, wherein the discharge head is an inkjet head.
<9> A system for manufacturing a three-dimensional formed object in which a formed object is three-dimensionally formed using a curable ink composition that is cured by active energy rays, the system including:
   a build stage that is movable and on which the formed object is three-dimensionally formed;
   a discharge head arranged in a direction intersecting a build surface of the build stage on which the formed object is formed and configured to discharge the curable ink composition onto the build surface of the build stage; and
   an irradiator that is movable and arranged in a direction intersecting the build surface of the build stage and arranged side by side with the discharge head along a moving direction of the build stage, the irradiator being configured to irradiate the curable ink composition discharged onto the build surface with the active energy rays, wherein
   an intensity of the active energy rays used to irradiate the curable ink composition is 1,900 mW/cm² or more and 3,400 mW/cm² or less, and
   a relative speed between the build stage and the irradiator is 100 mm/s or higher and 300 mm/s or lower.
<10> The system for manufacturing a three-dimensional formed object according to <9>, wherein the discharge head is an inkjet head.

## Claims

1. A method of manufacturing a three-dimensional formed object in which a formed object is three-dimensionally formed using a curable ink composition that is cured by active energy rays, the method comprising:
discharging the curable ink composition onto a build surface of a movable build stage from a discharge head configured to discharge the curable ink composition, the discharge head being arranged in a direction intersecting the build surface of the build stage on which the formed object is three-dimensionally formed; and
irradiating, from an irradiator, the curable ink composition discharged onto the build surface with the active energy rays, while moving the build stage relative to the irradiator, the irradiator being arranged in a direction intersecting the build surface of the build stage and arranged side by side with the discharge head along a moving direction of the build stage, the irradiator being movable, wherein
an intensity of the active energy rays used to irradiate the curable ink composition is 1,900 mW/cm² or more and 3,400 mW/cm² or less, and
a relative speed between the build stage and the irradiator is 100 mm/s or higher and 300 mm/s or lower.

2. The method of manufacturing the three-dimensional formed object according to claim 1, wherein
the curable ink composition includes a monomer having a methacryloyl group.

3. The method of manufacturing the three-dimensional formed object according to claim 2, wherein
the monomer having a methacryloyl group has a bisphenol structure or a urethane structure, or both a bisphenol structure and a urethane structure.

4. The method of manufacturing the three-dimensional formed object according to claim 1, wherein
the curable ink composition contains phosphine oxide as a polymerization initiator.

5. The method of manufacturing the three-dimensional formed object according to claim 1, wherein
the curable ink composition includes an inorganic filler.

6. The method of manufacturing the three-dimensional formed object according to claim 1, further comprising:
smoothing the curable ink composition discharged onto the build surface of the build stage.

7. The method of manufacturing the three-dimensional formed object according to claim 1, wherein
in the irradiating, the build stage is moved relative to the irradiator, and then moved relatively in a direction opposite to the previous movement of the build stage.

8. The method of manufacturing a three-dimensional formed object according to any one of claims 1 to 7, wherein
the discharge head is an inkjet head.

9. A system for manufacturing a three-dimensional formed object in which a formed object is three-dimensionally formed using a curable ink composition that is cured by active energy rays, the system comprising:
a build stage that is movable and on which the formed object is three-dimensionally formed;
a discharge head arranged in a direction intersecting a build surface of the build stage on which the formed object is formed and configured to discharge the curable ink composition onto the build surface of the build stage; and
an irradiator that is movable and arranged in a direction intersecting the build surface of the build stage and arranged side by side with the discharge head along a moving direction of the build stage, the irradiator being configured to irradiate the curable ink composition discharged onto the build surface with the active energy rays, wherein
an intensity of the active energy rays used to irradiate the curable ink composition is 1,900 mW/cm² or more and 3,400 mW/cm² or less, and
a relative speed between the build stage and the irradiator is 100 mm/s or higher and 300 mm/s or lower.

10. The system for manufacturing a three-dimensional formed object according to claim 9, wherein
the discharge head is an inkjet head.
